# EUROPEAN PATENT APPLICATION

(11) **EP 4 056 035 A1**
(43) Date of publication of application: **14.09.2022**
(21) Application number: 20905934.4
(22) Date of filing: 27.11.2020
(51) Int. Cl.: A01N 1/02

(54) **CARRIER, VACUUMIZING DEVICE AND TISSUE CRYOPRESERVATION SYSTEM**

(30) Priority: 24.12.2019 CN 201911349190
(71) Applicant: Shanghai Horizon Medical Science Co., Ltd., Shanghai 201318 (CN)
(72) Inventor: LI, Weijie, Shanghai 201318 (CN); GUO, Yingying, Shanghai 201318 (CN); ZONG, Guo, Shanghai 201318 (CN)
(74) Representative: Arnold & Siedsma
(86) International application number: PCT/CN2020/132438
(87) International publication number: WO 2021/129312

(57) **Abstract**

Disclosed are a carrier (100), a vacuumizing device (200), and a tissue cryopreservation system. The carrier (100) is provided with at least one freezing chamber (103) for loading a tissue, and a contact surface of the freezing chamber (103) that comes into contact with the tissue is provided with a plurality of flow guide holes (104). The carrier (100) may cooperate with the vacuumizing device (200) so as to suck away excess liquid, such as a protective agent, on a surface of the tissue by vacuum, and discharge the liquid from the freezing chamber (103) through the flow guide holes (104), thereby reducing the toxicity damage that may be caused by prolonged contact between the tissue and a high-concentration protective agent. In addition, discharging the excess liquid may also reduce the cryopreservation volume of the tissue and increase the cooling rate thereof during freezing. In particular, the vacuumizing device (200) can further vacuum seal the carrier (100) and make a sealing coating film tightly attach to the tissue, thereby reducing the thermal resistance between liquid nitrogen and the tissue, and also increasing the cooling rate during freezing, and preventing the formation of ice crystals in the tissue from causing irreversible damage to the tissue.

## Description

### TECHNICAL FIELD

The present application relates to the field of medical devices, and more particularly to a carrier, a vacuumizing device, and a tissue cryopreservation system.

### BACKGROUND

The cryopreservation of the ovarian tissue is a topic of great concern in the fields of assisted reproduction and tumors. For prepubertal women who cannot produce mature oocytes for fertility preservation before radiotherapy and chemotherapy, the cryopreservation of the ovarian tissue is one of important ways for preserving fertility. The low-temperature preservation method of the ovarian tissue mainly includes slow cryopreservation and vitrification cryopreservation. The slow cryopreservation needs to use a special programmed cooling equipment, which takes a longer cooling time and have the complex operation, and ice crystals inside cells are easily formed in the cooling process to cause irreversible damage to the ovarian tissue, so that the application and popularization of the slow cryopreservation of the ovarian tissue are limited clinically. In comparison, the ovarian tissues are placed in a high-concentration protective agent for vitrification cryopreservation, then the ovarian tissues are placed in liquid nitrogen for cooling and preservation by loading through a carrier, so that the tissues can be rapidly cooled and form a glassy state, and ice crystals inside cells are prevented from being formed. Research shows that the frozen effect of the vitrification cryopreservation of ovarian tissue is superior to that of the slow cryopreservation of ovarian tissue, and the vitrification cryopreservation is simple to operate, short in time consumption, and good in clinical application prospect.

The vitrification cryopreservation needs a faster cooling rate and a high-concentration protective agent, and the two factors are mutually influenced. Increasing the cooling rate can reduce the concentration of the protective agent required by vitrification. The cooling rate is related to many factors such as the volume of the residual solution of the tissue, the heat transfer resistance between liquid nitrogen, the material and thickness of the carrier, and the like. A conventional carrier for the vitrification cryopreservation of ovarian tissues mainly includes a frozen straw, a needle-punched carrier, or a stainless steel sheet and the like. The frozen straw can only cryopreserve a small volume of ovarian tissues, follicle loss can be caused in the process of shearing, crushing and cutting the tissues, and the hormone secretion after transplantation is maintained for a short time. A common needle-punched freezing carrier can cause irreversible mechanical damage to the ovarian tissue, and the tissue is easy to fall off from a steel needle during operation. After the stainless steel sheet carrier is loaded, excess solution attached to tissues is difficult to remove, the cryopreservation volume is large, which affects the cooling rate during freezing, and is not conducive to vitrification. Therefore, not removing excess liquid after loading the protective agent has a greater impact on the freezing rate.

In addition, closed cryopreservation carriers are also commonly used in clinical medicine to prevent cross infection caused by pathogenic bacteria existing in liquid nitrogen. Most of the existing closing methods are a sleeve method and a membrane coating method, but the heat transfer resistance of air existing in gaps between a sleeve and a tissue, and between a membrane and a tissue is large, which affects the cooling rate of the tissue, and ice crystals can be formed in the tissue, resulting in large ice crystal damage. Moreover, after the ovarian tissues of patients are collected, a plurality of samples need to be cryopreserved for later use. If common carriers on the market are used, high-throughput cryopreservation cannot be achieved, one patient needs a plurality of carriers for preserving the tissues, but the unit price of the carriers is high, resulting in high cryopreservation costs. In addition, after vitrification, the carrier with the tissue also needs to be placed in liquid nitrogen for unified management and preservation, and in this case, patient information needs to be handwritten or printed, and pasted outside the carrier, but the information is difficult to be confirmed when the carrier is taken, and the management is inconvenient.

### SUMMARY

An object of the present application is to provide a carrier, a vacuumizing device, and a tissue cryopreservation system, so as to improve the cooling rate of vitrification cryopreservation of tissue, especially ovarian tissue, and prevent the formation of ice crystals inside the tissue to cause irreversible damage to the tissue.

An object of the present application is to provide a carrier, a vacuumizing device, and a tissue cryopreservation system, so as to solve problems of high price of an existing carrier, inability to achieve high-throughput cryopreservation, and inconvenience in managing patient information.

In order to achieve the above objects, according to a first aspect of the present application, there is provided a carrier for cryopreservation of tissue. The carrier is provided with at least one freezing cavity. The freezing cavity is provided with a plurality of flow guiding holes on a contact surface thereof in contact with the tissue. The plurality of flow guiding holes are configured to vacuum liquid on a surface of the tissue and enable the liquid to be discharged out of the freezing cavity through the plurality of flow guiding holes.

Optionally, the contact surface of the freezing cavity in contact with the tissue includes a bottom surface and a side surface adjacent to the bottom surface, and the side surface has a slope relative to the bottom surface.

Optionally, a cross-section of the contact surface of the freezing cavity in contact with the tissue is U-shaped, semicircular, or semi-elliptical.

Optionally, the carrier is provided with a plurality of freezing cavities, the plurality of freezing cavities are arranged at intervals along an axial direction of the carrier.

Optionally, the flow guiding hole has an inlet disposed on the contact surface of the freezing cavity in contact with the tissue and an outlet far away from the contact surface of the freezing cavity in contact with the tissue, the inlet has a cross-sectional area greater than that of the outlet.

Optionally, a cross-sectional area of the flow guiding hole gradually decreases from the inlet to the outlet.

Optionally, the carrier is provided with an information recorder thereon, the information recorder records readable patient information. The information recorder includes a two-dimensional code and/or a radio frequency identification device (RFID) chip.

According to a second aspect of the present application, a vacuumizing device is provided, and is configured to cooperate with the carrier described in any one of the technical solutions of the present application to vacuum liquid on a surface of a tissue. The vacuumizing device includes a mounting seat and a vacuum pump. The mounting seat is provided with a placement cavity for the carrier to be placed. The vacuum pump is in communication with the plurality of flow guiding holes on the carrier through the placement cavity so as to vacuum the liquid on the surface of the tissue placed on the carrier.

Optionally, the vacuumizing device further includes a membrane configured to vacuum-package the carrier. The membrane is provided with an opening, the mounting seat is provided with a vacuum packaging port thereon, and the vacuum packaging port is connected to the opening and the vacuum pump, respectively.

Optionally, a shape of the placement cavity matches a shape of the carrier.

According to a third aspect of the present application, a tissue cryopreservation system is provided, which includes a carrier described in any one of the technical solutions of the present application and a vacuumizing device described in any one of the technical solutions of the present application.

Optionally, the tissue cryopreservation system further includes a water absorbent structure arranged between the carrier and the placement cavity, the water absorbent structure is configured to absorb liquid discharged from the flow guiding holes.

Optionally, the tissue is ovarian tissue.

Compared with the prior art, the carrier, the vacuumizing device, and the tissue cryopreservation system of the present application have the following advantages.

First, by cooperating the carrier with the vacuumizing device, the vacuumizing device can be used to vacuum excess liquid on the surface of the tissue, such as the protective agent, through the plurality of flow guiding holes, and discharge the excess liquid out of the freezing cavity along the flow guiding holes. In doing so, toxic damage to the tissue due to prolonged contact with high-concentration protective agent can be prevented. In addition, the excess liquid is discharged out of the freezing cavity, so that the cryopreservation volume of the tissue can be reduced, and the cooling rate during freezing is increased.

Second, by providing the information recorder on the carrier, for example the RFID chip and the two-dimensional code, not only can the patient information be recorded accurately to facilitate the quick information confirmation during extraction and avoid the potential damage to the tissue sample caused by prolonged staying under ambient temperature, but also the double guarantee of confirming the patient information can be provided to avoid the ethical and moral problems caused by information errors.

Third, the contact surface of the freezing cavity in contact with the tissue is provided with the bottom surface and the side surface which is adjacent to the bottom surface, and the side surface has a certain slope relative to the bottom surface, that is, the surface on which the tissue is placed has a certain slope. For example, the cross-section of the contact surface of the freezing cavity in contact with the tissue can be U-shaped, semicircular, or semi-elliptical, so that the liquid on the surface of the tissue can form a downward gathering effect by its own gravity, thereby improving the efficiency of liquid exudation.

Fourth, in actual use, the carrier is also vacuum-packaged by the membrane, so that the membrane is close to the tissue, which greatly reduces the heat transfer resistance between the liquid nitrogen and the tissue, can further improve the cooling rate during freezing, facilitate the reduction of the formation of ice crystals, and improve the cryopreservation effect.

### BRIEF DESCRIPTION OF THE DRAWINGS

FIG. 1 is a perspective view of a carrier according to an embodiment of the present application;
FIG. 2 is a front view of the carrier of the embodiment shown in FIG. 1.
FIG. 3 is a perspective view of a vacuumizing device according to an embodiment of the present application;
FIG. 4 is a front view of the vacuumizing device of the embodiment shown in FIG. 3; and
FIG. 5 is a flowchart of a tissue cryopreservation method according to an embodiment of the present application.

Illustration of reference numbers:
100-carrier; 101-handheld part; 102-radio frequency identification devices (RFID) chip; 103-freezing cavity; 104-flow guiding hole; 105-two-dimensional code;
200-vacuumizing device; 201-mounting seat; 202-placement cavity; 203-vacuum packaging port; 204-vacuum pump.

### DETAILED DESCRIPTION OF THE EMBODIMENTS

In order to make the content of the present application clearer and easier to understand, the present application will be further described in detail below with reference to the accompanying drawings and embodiments. However, it can be understood that the present application is not limited to the specific embodiments described below, and general substitutions known to those skilled in the art are also incorporated within the protection scope of the present application. It should be noted that the accompanying drawings are all in a very simplified form and in inaccurate scales, and are only used to facilitate and clearly assist the purpose of explaining the embodiments of the present application.

It should be understood that, in the following description, references to "upper" and "lower" with respect to various components may be made based on the accompanying drawings. Spatial terms such as "under ...", "beneath ...", "below", "above" and the like are intended to facilitate describing the positional relationship of one element to another element as illustrated in the drawings. Spatially relative terms may encompass various different orientations of the device in use or operation in addition to the orientation shown in the figures. The device may be otherwise oriented, such as rotated 90 degrees or at other orientations, and the spatially relative descriptors used herein are for interpretation accordingly.

Before describing the present application in detail, the main principle and idea of the present application will be explained herein. As described in the background art, the prior art has the problems that during vitrification cryopreservation of ovarian tissues, the cooling rate is slow, ice crystals are easy to generate, and the tissues are irreversibly damaged. Aiming at these technical problems, the core idea of the present application is to provide a carrier, a vacuumizing device, and a tissue cryopreservation system, which aims to reduce the cryopreservation volume and increase the cooling rate by removing the excess liquid on the tissue surface by vacuuming. After the excess liquid is removed, the carrier can be subjected to vacuum packaging by utilizing the membrane, so that the membrane for sealing is close to the tissue, which greatly reduces the heat transfer resistance between the liquid nitrogen and the tissue, improves the cooling rate, and prevents the irreversible damage to the tissue caused by the formation of ice crystals inside the tissue.

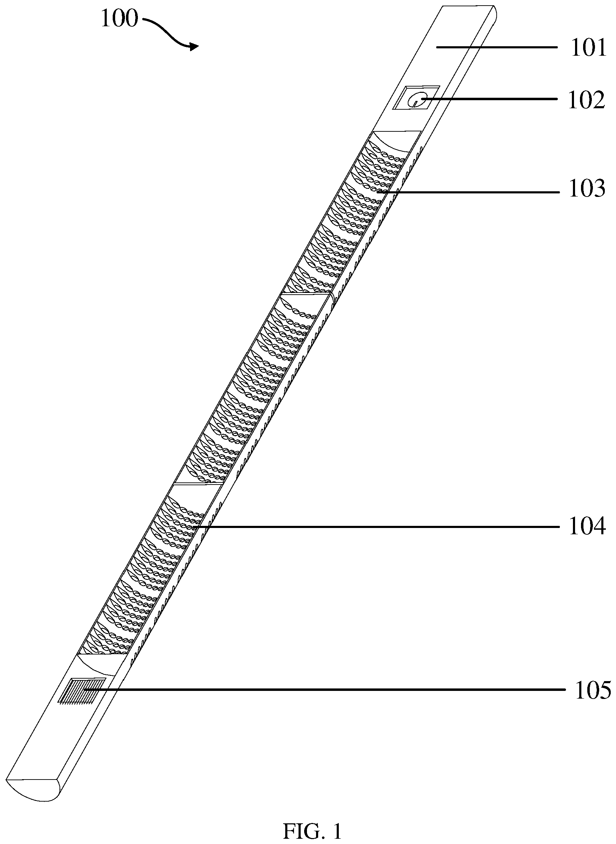

The carrier, the vacuumizing device, and the tissue cryopreservation system provided by an embodiment of the present application will be described below with reference to FIGS. 1 to 5.

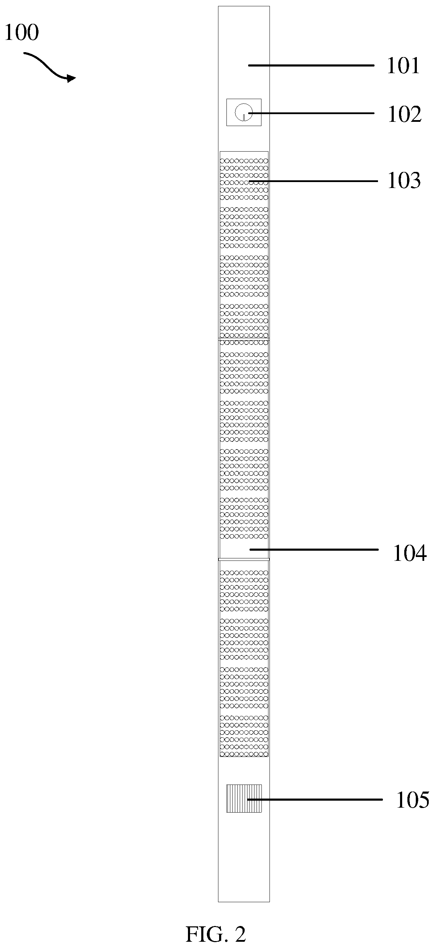

Referring to FIG. 1 and FIG. 2, which are a perspective view and a front view of a carrier 100 according to an embodiment of the present application, respectively. As shown in FIG. 1 and FIG. 2, the carrier 100 has at least one freezing cavity 103, and the freezing cavity 103 can be used to load tissue, especially ovarian tissue. In addition, a plurality of flow guiding holes 104 are provided on a contact surface of the freezing cavity 103 in contact with the tissue. Preferably, the freezing cavity is air permeable. The flow guiding hole 104 has an inlet disposed on the contact surface of the freezing cavity 103 in contact with the tissue and an outlet far away from the contact surface of the freezing cavity 103 in contact with the tissue. Preferably, a cross-sectional area of the inlet is larger than that of the outlet, so that the flow guiding hole 104 has a structure that is wide at the top and narrow at the bottom. It can be understood that, a diameter of the flow guiding hole 104 near the tissue is larger, so that an inlet section of the flow guiding hole 104 in contact with the tissue is wider, so as to increase the contact surface and collect liquid in a large area, and an outlet section thereof far away from the tissue is narrower, which is beneficial to improving liquid discharge efficiency. Optionally, the cross-sectional area of the flow guiding hole 104 gradually decreases from the inlet to the outlet.

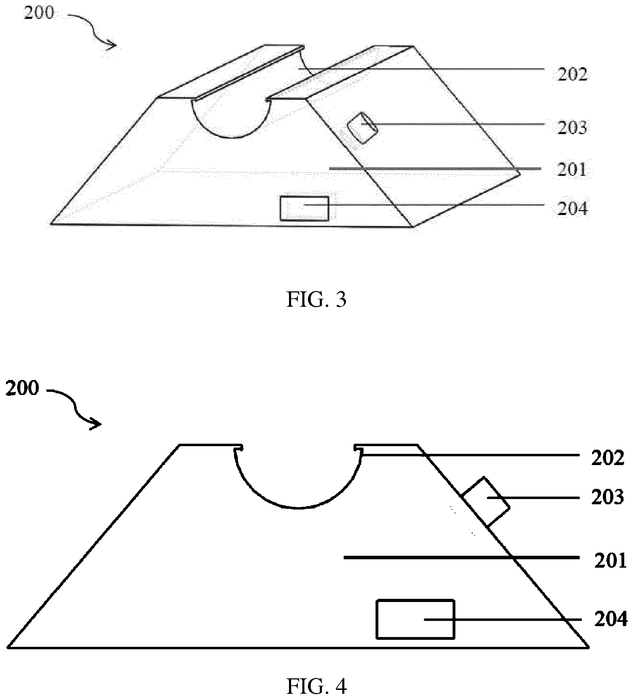

This embodiment also provides a vacuumizing device 200, referring to FIG. 3 and FIG. 4, which are a perspective view and a front view of the vacuumizing device 200, respectively. The vacuumizing device 200 is used to cooperate with the carrier 100 and includes a mounting seat 201. The mounting seat 201 is provided with a placement cavity 202, and the placement cavity 202 is used for the carrier 100 to be placed. A suction port corresponding to the outlet of the flow guiding hole of the carrier 100 may be provided in the placement cavity 202. In addition, the vacuumizing device 200 further includes a power equipment for vacuumizing, such as a vacuum pump 204. After the carrier 100 is positioned in the placement cavity 202, the power equipment may communicate with the plurality of flow guiding holes 104 on the carrier 100 through the suction port of the placement cavity 202 to vacuum the liquid from the surface of the tissue placed on the carrier. Taking the vacuum pump 204 as an example, the vacuum pump 204 can vacuum from the bottom of the carrier 100, and the air is flowed by using a pressure difference between an upper side and a lower side of the carrier 100, so as to drive the excess liquid on the surface of tissue above the carrier 100 to be discharged downwards through the flow guiding hole 104.

In this embodiment, the contact surface of the freezing cavity 103 in contact with the tissue includes a bottom surface and a side surface adjacent to the bottom surface. Optionally, the side surface has a slope relative to the bottom surface. Optionally, a slope ratio of the slope (a ratio of a vertical height to a horizontal width of a slope surface) ranges from 1:3 to 1: 1. The slope is arranged, so that liquid on the surface of tissue can form a downward gathering effect through gravity of the liquid, thereby improving the efficiency of liquid exudation. Further, a cross-section of the contact surface of the freezing cavity 103 in contact with the tissue may be formed in a U-shape, so that the liquid may be concentrated at a central recessed portion of the freezing cavity 103 (e.g., at the bottom surface of the contact surface) by the gravity of the liquid itself, thereby improving the efficiency of liquid exudation. In another embodiment, the cross-section of the contact surface of the freezing cavity 103 in contact with the tissue may be formed in a regular shape such as a semicircular shape or a semi-elliptical shape, or may also be formed in an irregular shape having a slope, such as a special shape.

Optionally, a plurality of freezing cavities 103 are provided, and the plurality of freezing cavities 103 may be arranged at intervals along an axial direction of the carrier 100, and the plurality of freezing cavities 103 are independent of each other. Further, for example, there are three or four freezing cavities 103. Therefore, one carrier 100 can store a plurality of tissue samples to achieve high-throughput storage. However, an existing carrier can usually only store one tissue sample, and since each cryopreservation usually needs to prepare 3 to 4 samples for later use/each person usually needs to prepare 3 to 4 samples for cryopreservation for later use, a patient needs to purchase a plurality of carriers at one time to ensure the number of the samples, and the unit price of each carrier is high, and thus the total cost is high. However, the carrier 100 provided by the embodiment of the present application achieves high-throughput storage, effectively reduces costs, and facilitates unified management of patient information.

Optionally, an information recorder is further provided on the carrier 100, the information recorder records patient information that can be read externally, and includes a two-dimensional code 105 and/or a radio frequency identification device (RFID) chip 102. Preferably, both the two-dimensional code 105 and the RFID chip 102 are provided on the carrier 100, so that double guarantee for the confirmation of patient information can be provided. Specifically, the RFID chip is embedded inside a handheld part 101, the RFID chip 102 is used to record patient information, which does not need handwriting, avoids potential contamination risks caused by ink, and makes data recording more accurate. The two-dimensional code 105 is used to record patient information for the second time to reduce information errors caused by operator errors, and can scan and read the patient information before being put into liquid nitrogen for freezing, to record the storage location, which is convenient for the hospital to achieve high-throughput management. In addition, the time for scanning the two-dimensional code is short, such method is quick and efficient, which can reduce the contact time of the tissue with a high-concentration protective agent before being frozen, thereby reducing the toxic damage to the tissue and improving the freezing effect.

In this embodiment, the carrier 100 has an overall rod shape. The carrier 100 includes a head part and a tail part which are oppositely arranged. The head part is provided with a two-dimensional code 105, the two-dimensional code can be directly printed, or printed on a label and then pasted on the head part of the carrier 10. The tail part is the handheld part 101 and can be used for holding. The handheld part 101 is provided with the RFID chip 102, and the freezing cavity 103 is located between the two-dimensional code 105 and the RFID chip 102. Preferably, a length of the carrier 100 is long enough to provide the plurality of freezing cavities 103. The plurality of freezing cavities 103 are sequentially arranged at intervals along the axial direction of the carrier 100 and are independent of each other. Preferably, a section of the carrier 100 for arranging the freezing cavities 103 has a thin-walled structure. For example, the cross-sections of the plurality of freezing cavities 103 can be sequentially provided to have a U-shaped, semicircular, and semi-elliptical thin-walled structures. It should be understood that the carrier 100 of the present application is not limited to the shape of a rod, and the arrangement is only a preferred embodiment of the present application. For example, the carrier 100 may also have a regular shape such as a square block or a round block, or an irregular shape.

A shape of the placement cavity 202 preferably matches a shape of the carrier 100, which facilitates accurate positioning of the carrier 100 and is more convenient to use. In this embodiment, the cross-section of the carrier 100 is U-shaped, so the cross-section of the placement cavity 202 is U-shaped corresponding thereto. In another embodiment, the cross-section of the carrier 100 may be in a regular shape such as a semicircular shape or a semi-elliptical shape, and may also be in an irregular shape having a slope such as a special shape. Correspondingly, the cross-section of the placement cavity 202 may be correspondingly in a regular shape such as a semicircular shape or a semi-elliptical shape, and may also be in an irregular shape having a slope such as a special shape.

Further, preferably, a water absorbent structure is disposed between the carrier 100 and the placement cavity 202, and the water absorbent structure is used for absorbing liquid discharged from the flow guiding holes 104. Optionally, the water absorbent structure includes gauze and/or foam. During actual operation, a size of the cross-section of the carrier 100 is slightly less than that of the placement cavity 202, specifically, an inner diameter of the placement cavity 202 after the water absorbent structure is placed is equal to an outer diameter of the carrier 100, so as to ensure that the water absorbent structure is attached to the carrier 100 and improve the water absorbent effect. Optionally, an edge of the placement cavity 202 is also provided with a boss structure for fixing the water absorbent structure and preventing the water absorbent structure from moving out of the placement cavity 202. After the water absorbent structure is arranged, the water absorbent structure can absorb the liquid discharged from the flow guiding holes 104, so that the liquid is prevented from accumulating in the vacuumizing device 200, and the water absorbent structure can be replaced before the carrier 100 is placed, so as to avoid contamination to the tissue.

Further, the vacuumizing device 200 is further provided with a membrane, and the membrane is used to package the carrier 100, so that cross infection of multiple tissue samples in liquid nitrogen can be avoided. Further, the membrane is a membrane made of plastic, and an opening is formed on the membrane. Further, a vacuum packaging port 203 is provided on the mounting seat 201 of the vacuumizing device 200, and the vacuum packaging port 203 is connected to the opening of the membrane and the vacuum pump 204, respectively. During the use, after the membrane is sleeved on the carrier 100, connecting the opening of the membrane to the vacuum packaging port 203 can remove the excess air, so that the membrane is close to the surface of the tissue, and after vacuumizing, the opening of the membrane can be sealed and packaged by means of heat sealing or the like, and the carrier 100 is placed in liquid nitrogen for cooling and preservation after being sealed. The present application can remove air heat resistance between tissues and liquid nitrogen through vacuum packaging, and improve the cooling rate, so as to improve the vitrification effect.

An embodiment of the present application further provides a tissue cryopreservation system, including the carrier 100 and the vacuumizing device 200 of this embodiment. By adopting the tissue cryopreservation system of the present application, through the cooperation of the carrier 100 and the vacuumizing device 200, excess liquid on the surface of the tissue loaded by the carrier 100, such as a protective agent on ovarian tissue, can be removed, so as to reduce the cryopreservation volume. Moreover, the carrier 100 from which the protective agent has been removed is vacuum-packaged by the vacuumizing device 200, so that the heat resistance between liquid nitrogen and the tissue can be reduced. It can be seen that the tissue cryopreservation system of the present application reduces the cryopreservation volume, reduces the heat transfer resistance, increases the cooling rate, and can reduce the formation of ice crystals and improve the vitrification cryopreservation effect.

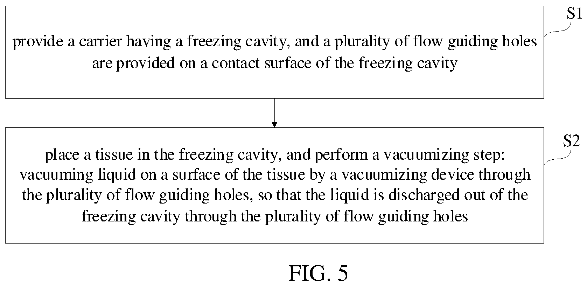

Correspondingly, an embodiment of the present application also provides a tissue cryopreservation method, which can be used to cryopreserve tissue, such as ovarian tissue. Referring to FIG. 5, which is a flowchart of a tissue cryopreservation method according to an embodiment of the present application. The tissue cryopreservation method of the present application will be described in detail below by taking the carrier 100 shown in FIGS. 1 to 2 and the vacuumizing device 200 shown in FIGS. 3 to 4 as examples. It should be understood that the carrier 100 and the vacuumizing device 200 are only used as a preferred embodiment for illustration, and in fact, the device for implementing the tissue cryopreservation method of the present application is not limited to the carrier 100 and the vacuumizing device 200. The tissue cryopreservation method includes the following steps.

Firstly, step S1 is performed to provide a carrier 100 having a freezing cavity 103, and a plurality of flow guiding holes 104 are provide on a contact surface of the freezing cavity 103 in contact with the carrier.

Next, step S2 is performed to place a tissue in the freezing cavity 103, and perform a vacuumizing step.

Liquid on a surface of the tissue is vacuumed by a vacuumizing device 200 through the plurality of flow guiding holes 104, so that the liquid is discharged out of the freezing cavity 103 through the plurality of flow guiding holes 104.

Optionally, after the liquid on the surface of the tissue is vacuumed, the tissue cryopreservation method further includes: packaging the carrier 100, and placing the carrier 100 into liquid nitrogen for cooling and storing.

Optionally, the vacuumizing device 200 includes a vacuum pump 204 and a mounting seat 201, and the mounting seat 201 is provided with a placement cavity 202. In addition, before the vacuumizing, the tissue cryopreservation method further includes: placing a water absorbent structure in the placement cavity 202, and placing the carrier 100 loaded with the tissue in the placement cavity 202. During the vacuumizing, the liquid on the surface of the tissue is vacuumed by the vacuum pump 204 through the placement cavity 202 and the plurality of flow guiding holes 104.

It can be seen that, in step S2, the vacuum pump 204 can be further used as a power equipment for the vacuumizing device 200, which can quickly remove the liquid on the surface of the tissue and is simple and convenient to operate. In practice, it shows that when the vacuum pump 204 is used as the power equipment, the liquid on the surface of the tissue can still be well removed when the vacuumizing time is reduced to within 10 s, even reduced to 2 s. As the operation time decreases, the contact time of the tissue with the high-concentration protective agent before being frozen is reduced, which can reduce the toxic damage to the tissue. In addition, before the vacuumizing, a replaceable water absorbent gauze is placed under the carrier 100, so that the liquid discharged from the flow guiding holes 104 can be removed, and the excess liquid can be prevented from accumulating in the vacuumizing device 200.

Optionally, the steps of packaging the carrier 100 are specifically as follows.

The carrier 100 is loaded into a membrane, and air in the membrane is evacuated through an opening of the membrane by the vacuumizing device 200, and after the air is evacuated, the opening of the membrane is sealed.

The various embodiments in this specification are described in a progressive manner, and each embodiment focuses on differences from other embodiments, and the same and similar parts among the various embodiments are referred to each other.

To sum up, the carrier, the vacuumizing device, and the tissue cryopreservation system provided by the present application can reduce the cryopreservation volume of the tissue, increase the cooling rate, reduce irreversible damage to the tissue caused by the formation of ice crystals, and improve the vitrification cryopreservation effect. In addition, the use of the membrane can also reduce the air heat resistance between the liquid nitrogen membrane and the tissue, increase the cooling rate, effectively reduce the formation of ice crystals, reduce the probability of irreversible damage to the tissue during the cryopreservation process, and improve the vitrification cryopreservation effect.

The above description is only for the purpose of describing some embodiments of the present application, and is not intended to limit the scope of the present application, and any variations and modifications made by those skilled in the art based on the above application are within the scope of the appended claims.

## Claims

1. A carrier, configured for cryopreservation of a tissue, wherein the carrier is provided with at least one freezing cavity, the freezing cavity is provided with a plurality of flow guiding holes on a contact surface thereof in contact with the tissue, the plurality of flow guiding holes are configured to vacuum liquid on a surface of the tissue and enable the liquid to be discharged out of the freezing cavity through the plurality of flow guiding holes.

2. The carrier of claim 1, wherein the contact surface of the freezing cavity in contact with the tissue comprises a bottom surface and a side surface adjacent to the bottom surface, the side surface has a slope relative to the bottom surface.

3. The carrier of claim 2, wherein a cross-section of the contact surface of the freezing cavity in contact with the tissue is U-shaped, semicircular, or semi-elliptical.

4. The carrier of claim 1, wherein the carrier is provided with a plurality of freezing cavities, the plurality of freezing cavities are arranged at intervals along an axial direction of the carrier.

5. The carrier of claim 1, wherein the flow guiding hole has an inlet disposed on the contact surface of the freezing cavity in contact with the tissue and an outlet far away from the contact surface of the freezing cavity in contact with the tissue, the inlet has a cross-sectional area greater than that of the outlet.

6. The carrier of claim 5, wherein a cross-sectional area of the flow guiding hole gradually decreases from the inlet to the outlet.

7. The carrier of claim 1, wherein the carrier is provided with an information recorder thereon, the information recorder records readable patient information, and the information recorder comprises a two-dimensional code and/or a radio frequency identification device (RFID) chip.

8. A vacuumizing device, configured to cooperate with the carrier according to any one of claims 1 to 7 to vacuum liquid on a surface of a tissue, the vacuumizing device comprising a mounting seat and a vacuum pump;
wherein the mounting seat is provided with a placement cavity for the carrier to be placed; the vacuum pump is in communication with the plurality of flow guiding holes on the carrier through the placement cavity so as to vacuum the liquid on the surface of the tissue placed on the carrier.

9. The vacuumizing device of claim 8, further comprising a membrane configured to vacuum-package the carrier, wherein the membrane is provided with an opening, the mounting seat is provided with a vacuum packaging port thereon, and the vacuum packaging port is connected to the opening and the vacuum pump, respectively.

10. The vacuumizing device of claim 8, wherein a shape of the placement cavity matches a shape of the carrier.

11. A tissue cryopreservation system, comprising a carrier according to any one of claims 1 to 7 and a vacuumizing device according to any one of claims 8 to 10.

12. The tissue cryopreservation system of claim 11, further comprising a water absorbent structure arranged between the carrier and the placement cavity, wherein the water absorbent structure is configured to absorb liquid discharged from the flow guiding holes.

13. The tissue cryopreservation system of any one of claims 11 to 12, wherein the tissue is ovarian tissue.
